# EUROPEAN PATENT SPECIFICATION

(11) **EP 2 258 530 B1**
(45) Date of publication and mention of the grant of the patent: **20.11.2019**
(21) Application number: 09723956.0
(22) Date of filing: 16.03.2009
(51) Int. Cl.: B29C 44/00, B32B 5/18, B60R 13/02, C08J 5/04, B29C 44/08, B29C 44/56

(54) **PROCESS FOR PRODUCING HEAT-EXPANDABLE BASE FOR INTERIOR VEHICULAR TRIM AND PROCESS FOR PRODUCING BASE FOR INTERIOR VEHICULAR TRIM FROM THE SAME**
VERFAHREN ZUR HERSTELLUNG EINER WÄRMEDEHNBAREN BASIS FÜR EINE FAHRZEUGINNENVERKLEIDUNG UND VERFAHREN ZUR HERSTELLUNG EINER BASIS FÜR EINE FAHRZEUGINNENVERKLEIDUNG DARAUS
PROCÉDÉ DE PRODUCTION D UNE BASE EXTENSIBLE PAR LA CHALEUR DESTINÉE À L HABILLAGE INTÉRIEUR D UN VÉHICULE ET PROCÉDÉ DE PRODUCTION D UNE BASE DESTINÉE À L HABILLAGE INTÉRIEUR D UN VÉHICULE GRÂCE À CETTE BASE EXTENSIBLE PAR LA CHALEUR

(30) Priority: 28.03.2008 JP 2008086860
(43) Date of publication of application: 08.12.2010
(73) Proprietor: Nakagawa Sangyo Co., Ltd., Inuyama-shi, Aichi 484-0917 (JP)
(72) Inventor: NAKAGAWA, Yukihiro, Inuyama-shi Aichi 484-0917 (JP); NAKAGAWA, Noriaki, Inuyama-shi Aichi 484-0917 (JP); TAKAHASHI, Goro, Toyota-shi Aichi 471-8571 (JP); SAKAMOTO, Tatsuo, Toyota-shi Aichi 471-8571 (JP)
(74) Representative: TBK
(86) International application number: PCT/JP2009/001149
(87) International publication number: WO 2009/119033

(56) References cited:
- EP-A1- 1 897 990
- JP-A- 2 045 135
- JP-A- 2 286 225
- JP-A- 5 004 291
- JP-A- 6 071 065
- JP-A- 2003 154 589
- JP-A- 2006 176 650
- JP-U- 63 124 122
- US-A- 5 258 089

## Description

### [FIELD OF THE INVENTION]

The present invention relates to a process for production of a thermally expandable base material for vehicle interior and a process for production of a base material for vehicle interior using the same. More specifically, the present invention relates to a process for production of a thermally expandable base material enabling production of an interior material for vehicle that is lightweight and has sufficient sound-absorbing properties, high stiffness and the like, and to a process for production of a base material for vehicle interior using the thermally expandable base material.

### [BACKGROUND ART]

A base material produced by mixing and depositing inorganic and resin fibers, needle-punching the deposited fibers to give a mat, heating the mat at a temperature at which the resin fibers melt, hot-pressing the mat, and cold-pressing the mat to form a shape has been used conventionally for an interior material for vehicle. The base material thus obtained has good thermal dimensional stability and small dimensional change ratio in heating, but must have high weight per unit area to produce an interior material for vehicle having high stiffness. The base material therefore cannot fully meet the current needs for lighter vehicles.

For the purpose of solving the problem, there has been proposed a base material for vehicle interior obtained by mixing and depositing inorganic fibers and resin fibers and/or a resin powder to give a mat, and adding a thermally expandable microcapsule to the mat. When the base material is used, the thermally expandable microcapsule expands in a secondary molding step and can be easily reduced in weight, while a product of the secondary molding step has sufficient thickness and high stiffness. Such a base material can be produced, for example, by needling fibers mainly composed of a glass fiber to give a fiber felt article, dispersing a thermoplastic resin binder and a foamable fine sphere in the fiber felt article, and foaming to form a shape (see, e.g., PATENT DOCUMENT 1). In addition, there is also a known method for producing an expanded mold article by dispersing a reinforcing fiber, a thermally expandable powder and the like into a specific aqueous medium to give a foamy solution, papermaking with the solution to form a web, heating and pressing the web, cooling it to give a stampable sheet, heating the stampable sheet to expand the thermally expandable powder to form a shape, and cooling (see, e.g., PATENT DOCUMENT 2).

[PATENT DOCUMENT 1] JP-A H02-45135 (family document of US5258089A)
[PATENT DOCUMENT 2] JP-A 2006-342437

### [DISCLOSURE OF THE INVENTION]

### [PROBLEMS THAT THE INVENTION IS TO SOLVE]

However, the method for producing the base material described in PATENT DOCUMENT 1 has a problem that thermal expanded microcapsule has a reduced specific gravity (for example, the specific gravity is reduced approximately 1/50 times between before and after thermal expansion) to fly apart. The method described in PATENT DOCUMENT 2 employs papermaking to form a web and has a problem that the method requires an apparatus of complicated structure and comprises cumbersome operations and steps. The method also has a cost disadvantage that the foamy solution used comprises a surfactant, a reinforcing fiber, a thermally expandable powder and the like and thus is expensive.

The present invention is to solve these problems and intends to provide a method for producing a thermally expandable base material for vehicle interior enabling production of an interior material for vehicle that is lightweight and has sufficient sound-absorbing properties, high stiffness and the like. Additionally, the present invention intends to provide a method for producing a base material for vehicle interior comprising a step of thermally expanding the thermally expandable base material for vehicle interior, which step is performed with a simple operation of heating at a predetermined temperature.

### [MEANS FOR SOLVING THE PROBLEMS]

The present invention is defined in claim 1. Preferred embodiments are disclosed in the dependent claims.

### [EFFECT OF THE INVENTION]

The method according to claim 1 includes, inter alia, mixing three emulsions, impregnating an inorganic fiber mat with the mixed emulsion, drying the inorganic mat at a predetermined temperature, heating the inorganic mat, hot-pressing and cooling, which steps are performed with simple operations, and a thermally expandable base material for vehicle interior enabling production of an interior material for vehicle that is lightweight and has sufficient sound-absorbing properties, high stiffness and the like can be easily produced at low cost.

In the case where the hot-pressing is preferably conducted at a temperature that is higher than a melting point of the synthetic resin powder by 10°C to 50°C and is in the range from the thermal expansion starting point of the thermally expandable microcapsule to a temperature 80°C lower than the thermal expansion starting point, the inorganic fibers can be bonded by the synthetic resin to reinforce the inorganic mat, and the resultant thermally expandable base material for vehicle interior will be easy to use, handle, and so on.

Further, in the case where the inorganic fiber mat is a glass fiber mat, a thermally expandable base material for vehicle interior enabling production of an interior material for vehicle having sufficient heat-insulating and sound-absorbing properties can be easily produced at low cost. Glass fibers are easily available at low cost and favorable on the cost front.

Additionally, in the case where the synthetic resin powder is a polyolefin resin powder, the powder melts at a relatively low temperature and can easily bind inorganic fibers to each other. And a thermally expandable base material for vehicle interior of which the inorganic fiber mat can be easily reinforced internally thus can be easily produced.

Furthermore, in the case where a resin-based adhesive powder in the resin-based adhesive emulsion is an acrylic resin powder, it is possible to easily produce a thermally expandable base material for vehicle interior enabling production of an interior material for vehicle that has good shape-forming properties and high strength.

Moreover, in the case where contents of the synthetic resin powder, the thermally expandable microcapsule and the resin-based adhesive powder contained in the resin-based adhesive emulsion are preferably 65% to 85% by weight, 5% to 18% by weight, and 6% to 22% by weight, respectively, based on 100% by weight of a total of the synthetic resin powder, the thermally expandable microcapsule and the resin-based adhesive powder, a thermally expandable base material for vehicle interior having high strength can be easily produced. When the base material is used, an interior material for vehicle that has good shape-forming properties and high strength and is appropriately heat-expanded can be obtained.

The method includes heating the thermally expandable base material for vehicle interior at a temperature higher than the thermal expansion starting point of the thermally expandable microcapsule to thermally expand the thermally expandable base material for vehicle interior, which step is performed with a simple operation, and a thermally expandable base material for vehicle interior enabling production of a base material for vehicle interior that is lightweight and has sufficient sound-absorbing properties, high stiffness and the like can be easily produced.

Further, in the case where the heating of the thermally expandable base material for vehicle interior is conducted at a temperature that is higher than the thermal expansion starting point of the thermally expandable microcapsule by 5°C to 50°C, a base material for vehicle interior that is appropriately heat-expanded and sufficiently lightweight can be obtained.

### [BRIEF DESCRIPTION OF THE DRAWINGS]

Fig. 1 shows a schematic illustration of an apparatus and steps for producing an inorganic fiber mat;
Fig. 2 shows a schematic illustration of an apparatus and steps for producing a thermally expandable base material for vehicle interior; and
Fig. 3 shows a schematic illustration of an apparatus and steps for producing a base material for vehicle interior.

### [EXPLANATION OF THE REFERENCE NUMBERS]

1: inorganic fiber mat (glass fiber mat), 11: inorganic fiber (glass fiber), 12: web, 2: thermally expandable base material for vehicle interior, 3: base material for vehicle interior, 4: interior material for vehicle, 511 & 512: opening drum, 52: carrying roll, 53: belt conveyer, 54: needle-punching machine, 55: mat roll, 561 & 562: auxiliary mat roll, 57: winder, 61: winder, 62: emulsion mixture tank, 63: wringing rolls, 641: low-temperature drying chamber, 642: high-temperature drying chamber, 643: cross wall, 644: level difference roll, 65: hot-pressing machine, 66: cold-pressing machine, 67: cutter, 68: shipping box, 41: base material placing table, 72: thermal expanding chamber, 73: compression molding machine.

### [DESCRIPTION OF THE PREFERRED EMBODIMENT]

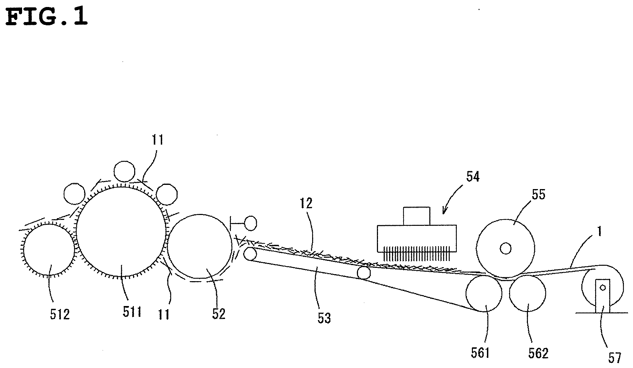

Hereinafter, the present invention will be described in detail with reference to Figs. 1 to 3. 1. Thermally expandable base material for vehicle interior

The method for producing a thermally expandable base material for vehicle interior of the present invention is characterized by comprising: mixing a synthetic resin emulsion, a thermally expandable microcapsule emulsion, and a resin-based adhesive emulsion to prepare an emulsion mixture; impregnating an inorganic fiber mat with the emulsion mixture; drying the inorganic fiber mat at a temperature lower than the thermal expansion starting point of the thermally expandable microcapsule contained in the emulsion mixture to remove an aqueous medium; heating the inorganic fiber mat at a temperature at which a synthetic resin powder contained in the emulsion mixture melts and which is lower than the thermal expansion starting point of the thermally expandable microcapsule; hot-pressing the inorganic fiber mat; and cooling the inorganic fiber mat.

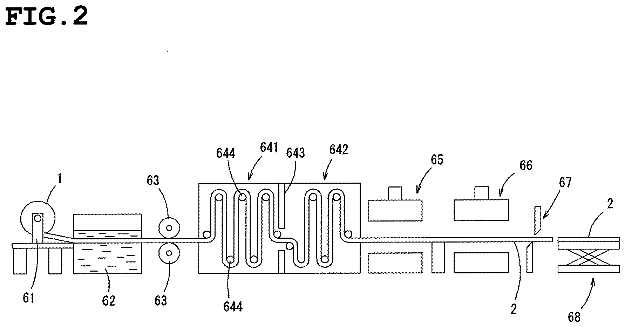

The apparatus for producing the thermally expandable base material for vehicle interior is not particularly limited. For example, it can be produced using the following apparatus (see, Fig. 2) .

An inorganic fiber mat 1 wound on a winder 61 is fed and passed through an emulsion mixture tank 62 to be impregnated with an emulsion mixture. After that, the inorganic fiber mat 1 impregnated with the emulsion mixture is wrung with wringing rolls 63. Subsequently, and dewatered inorganic fiber mat is passed through a low-temperature drying chamber 641 and a high-temperature drying chamber 642 in this order to be dried to remove a medium such as water. There are not necessarily two drying chambers of low-temperature and high-temperature. And there may be only one chamber set to a predetermined temperature so long as the medium can be sufficiently removed. Additionally, when the high-temperature drying chamber 642 is set to a temperature higher than a melting point of the synthetic resin powder, the synthetic resin powder can be melt in the high-temperature drying chamber 642. Then, the dried inorganic fiber mat is introduced into a hot-pressing machine 65 to melt the synthetic resin powder contained in the synthetic resin emulsion. It is noted that hot-pressing is performed at a temperature in which the thermally expandable microcapsule does not expand. Then, the inorganic fiber mat is cooled with a cold-pressing machine 66 and is cut into a predetermined dimension using a cutter 67 to give a thermally expandable base material for vehicle interior 2.

As the above-mentioned "synthetic resin emulsion", an emulsion containing a synthetic resin powder dispersed and contained in an aqueous medium can be used. Examples of the synthetic resin powder include synthetic resin powders other than a resin-based adhesive powder dispersed and contained in a resin-based adhesive emulsion. Preferred is a polyolefin resin powder. Examples of the polyolefin resin powder include powders of (1) high-density and low-density polyethylenes; (2) a linear low-density polyethylene, a copolymer of ethylene with other monomer such as an ethylene-propylene copolymer and an ethylene-vinyl acetate copolymer; and (3) a polyolefin resin such as polypropylene. Among them, high-density polyethylene powder and polypropylene powder are preferable, and high-density polyethylene powder is particularly preferable. The synthetic resin powder in the above-mentioned synthetic resin emulsion may be one type or be two or more types thereof. In many cases, the synthetic resin emulsion contains only one type of a synthetic resin powder.

The average particle diameter of the synthetic resin powder contained in the synthetic resin emulsion is not specifically limited, but is preferably in the range from 10 to 200 µm, more preferably from 20 to 150 µm, and particularly from 30 to 100 µm. The synthetic resin powder having the average particle diameter in the range from 10 to 200 µm can sufficiently bind inorganic fibers, resulting in the inorganic fiber mat sufficiently reinforced internally. The average particle diameter of the synthetic resin powder can be determined by a method such as microscopic observation and particle size measurement by photo-extinction, using a powder obtained by removing a medium from the emulsion.

The content of the synthetic resin powder in the synthetic resin emulsion is also not specifically limited, but is preferably in the range from 35% to 60% by weight, more preferably from 39% to 55% by weight, and particularly 42% to 50% by weight, based on 100% by weight of the synthetic resin emulsion. The synthetic resin powder containing at an amount of 35% to 60% by weight can easily and sufficiently bind inorganic fibers, resulting in the inorganic fiber mat sufficiently reinforced internally.

As the above-mentioned "thermally expandable microcapsule emulsion", an emulsion containing a thermally expandable microcapsule dispersed and contained in an aqueous medium can be used. The thermally expandable microcapsule contained in the emulsion generally includes a volatile hydrocarbon such as butane and isobutane and has a shell composed of a vinylidene chloride-acrylonitrile copolymer, poly vinyl chloride, poly vinylidene chloride, polyacrylonitrile and the like. In the present invention, composition of the thermally expandable microcapsule contained in the emulsion is not specifically limited, and types of the hydrocarbon included in the microcapsule and a material of the shell of the microcapsule may be, for example, those described above or may be other hydrocarbons and polymers, respectively.

The thermally expandable microcapsule is almost spherical (including spherical) and has generally a diameter in the range from 10 to 50 µm, preferably from 10 to 45 µm, and particularly from 15 to 40 µm. When the thermally expandable microcapsule is heated to a temperature higher than its thermal expansion starting point, the microcapsule expands preferably to 4 to 30 times (coefficient of volume expansion). The diameter after thermal expansion, which may be varied according to a diameter and an expansion ratio thereof before expansion, will be in the range from 20 to 300 µm, for example, and particularly from 30 to 200 µm. In the present invention, preferable thermally expandable microcapsule is one that has a diameter before thermal expansion of preferably in the range from 10 to 50 µm and particularly from 15 to 40 µm, that can thermally expand to preferably 8 to 27 times (coefficient of volume expansion) and particularly 18 to 27 times (coefficient of volume expansion), and that leads to a diameter after thermal expansion of preferably in the range from 20 to 150 µm and particularly from 40 to 120 µm. An emulsion containing such a thermally expandable microcapsule can lead to produce a thermally expandable base material for vehicle interior enabling easy production of an interior material for vehicle that is lightweight and has sufficient sound-absorbing properties, high stiffness and the like.

The content of the thermally expandable microcapsule in the thermally expandable microcapsule emulsion is not specifically limited, but is preferably in the range from 10% to 30% by weight, more preferably from 14% to 27% by weight, and particularly from 17% to 24% by weight, based on 100% by weight of the thermally expandable microcapsule emulsion. A thermally expandable microcapsule emulsion containing the thermally expandable microcapsule in an amount of 10% to 30% by weight can lead to produce a thermally expandable base material for vehicle interior enabling easier production of an interior material for vehicle that is lightweight and has sufficient sound-absorbing properties, high stiffness and the like.

As the above-mentioned "resin-based adhesive emulsion", an emulsion containing a resin-based adhesive powder dispersed and contained in an aqueous medium can be used. The resin-based adhesive powder is not specifically limited so long as it can bind an inorganic fiber with a thermally expanded microcapsule when the thermally expandable base material for vehicle interior is expanded by thermally expanding the thermally expandable microcapsules. Examples of the resin-based adhesive powder include a powder of: (1) an acrylic resin such as ethylene-methyl methacrylate copolymer, ethylene-ethyl acrylate copolymer and ethylene-acrylic acid copolymer; (2) a urethane resin; (3) a vinyl acetate resin; and the like. Among these resin-based adhesive powders, an acrylic resin powder is preferable, and particularly preferred are powders of ethylene-methyl methacrylate copolymer and ethylene-ethyl acrylate copolymer.

The average particle diameter of the resin-based adhesive powder in the resin-based adhesive emulsion is not specifically limited, but is preferably in the range from 0.05 to 0.7 µm, more preferably from 0.05 to 0.4 µm, and particularly from 0.05 to 0.2 µm. When a resin-based adhesive emulsion in which average diameter of the resin-based adhesive powder is in the range from 0.05 to 0.7 µm is used, the emulsion has good dispersibility, and an inorganic fiber mat can be uniformly impregnated with the emulsion mixture to give more homogeneous thermally expandable base material for vehicle interior.

The content of the resin-based adhesive powder in the resin-based adhesive emulsion is not specifically limited, but is preferably in the range from 35% to 65% by weight, more preferably from 40% to 57% by weight, and particularly from 45% to 52% by weight based on 100% by weight of the resin-based adhesive emulsion. A resin-based adhesive emulsion containing a resin-based adhesive powder in an amount in the range from 35% to 65% by weight can sufficiently firmly bind an inorganic fiber with a thermally expanded microcapsule and internally reinforce the base material for vehicle interior.

Three emulsions described above each use an aqueous medium. The aqueous medium may be water, or may be a mixture of water as a main ingredient with at least one organic solvent selected from an alcohol, an ester, a ketone, an ether and the like. When the aqueous medium is the mixture, the content of the organic solvent is preferably not more than 10% by weight, and particularly not more than 5% by weight based on 100% by weight of the aqueous medium. The organic solvent is preferably an alcohol and an example thereof includes methanol, ethanol, n-propanol, isopropanol, ethylene glycol and the like. Among these, methanol and ethanol having excellent hydrophilicity are preferable.

It is preferable that at least one of the synthetic resin powder in the synthetic resin emulsion and the resin-based adhesive powder in the resin-based adhesive emulsion contains a flame retardant. Although the inorganic fiber mat has good flame retardancy under ordinary circumstances, the thermally expandable base material for vehicle interior contains organic ingredients derived from the synthetic resin powder and the resin-based adhesive powder and has reduced flame retardancy. Addition of a flame retardant to at least one of the synthetic resin powder and the resin-based adhesive powder can sufficiently prevent reduction in flame retardancy of the resultant thermally expandable base material for vehicle interior. Any flame retardant can be used without specific limitation and example thereof includes a nitrogen-containing compound such as urea and melamine cyanurate, a phosphoric compound such as polyphosphoric acid, an organic halide such as chlorinated paraffin and decabromobiphenyl ether, a hydrated metal oxide such as aluminium hydroxide and magnesium hydroxide, and the like. Among these flame retardants, a nitrogen-containing compound and a phosphoric compound are preferred, because they do not produce hazardous gases when burned and not have to be added to the resin as much as a hydrated metal oxide is added. Such flame retardant is preferably a melamine cyanurate that is a nitrogen-containing compound and polyphosphoric acid that is a phosphoric compound. Even more preferred is a nitrogen-containing polyphosphoric compound such as melamine polyphosphate and guanidine polyphosphate. The flame retardant may be used singly or in combination of two or more types thereof.

The content of the flame retardant is not specifically limited and the flame retardant is preferably added in an appropriate amount according to a type thereof. In the case of, for example, a nitrogen-containing compound or a phosphoric compound, a small amount can lead to sufficient flame retardancy, while a hydrated metal oxide must be added in a large amount. If the content of the flame retardant is too little, an interior material for vehicle having sufficient flame retardancy cannot be obtained. On the other hand, if the content is too much, the flame retardant may bleed out.

The above-mentioned "emulsion mixture" is an emulsion obtained by mixing the synthetic resin emulsion, the thermally expandable microcapsule emulsion and the resin-based adhesive emulsion. The mixing method is not specifically limited. Three emulsions may be simultaneously added to a container, stirred and mixed. Alternatively, any two of them may be mixed first, and the other emulsion is added, stirred, and mixed. It is also possible that to a container containing any one emulsion are added the other two emulsions simultaneously or sequentially, and stirred to be mixed. An aqueous medium may be further added to the emulsion mixture to dilute the mixture if necessary.

The weight ratio of three emulsions in mixing, which may be varied according to concentration of each medium contained in respective emulsions, is preferably in the range from 65% to 85% by weight for the synthetic resin powder, 5% to 18% by weight for the thermally expandable microcapsule and 6% to 22% by weight for the resin-based adhesive powder, respectively, and particularly 70% to 80% by weight for the synthetic resin powder, 8% to 15% by weight for the thermally expandable microcapsule and 10% to 18% by weight for the resin-based adhesive powder, respectively, based on 100% by weight of a total of the synthetic resin powder, the thermally expandable microcapsule and the resin-based adhesive powder in the emulsion mixture. The above-mentioned ratio can provide a thermally expandable base material for vehicle interior enabling production of an interior material for vehicle that is lightweight and has sufficient sound-absorbing properties, high stiffness and the like.

The above-mentioned "inorganic fiber mat" is a base body of the thermally expandable base material for vehicle interior and has good flame retardancy, thermal insulation and the like. The inorganic fiber constituting the inorganic mat is not particularly limited and various inorganic fibers can be used. Examples of the inorganic fiber include a glass fiber, a carbon fiber, a basalt fiber, and the like. The inorganic fiber may be used singly or in combination of two or more types thereof. Among these inorganic fibers, a glass fiber is preferable, which is easily available and inexpensive. In the case of using a glass fiber, the content thereof is preferably not less than 80% by weight, and particularly not less than 90% by weight based on 100% by weight of the total amount of the inorganic fiber. All of the inorganic fibers may be glass fibers.

The inorganic fiber mat is generally produced as follows (see, Fig. 1).

A rolled roving of an inorganic fiber is cut to a predetermined length, and the inorganic fiber 11 is opened with opening drums 511 and 512. Then the inorganic fiber 11 is pneumatically floated on the belt conveyer 53 with an air current to give a puffy web 12. The web 12 is subjected to needle punching with the needle-punching machine 54, and rolled up with the mat roll 55 and the auxiliary mat rolls 561 and 562 to give an inorganic fiber mat 1 having a predetermined weight per unit area and thickness.

The thickness of the inorganic fiber mat is not specifically limited, but is preferably in the range from 2 to 15 mm, and particularly from 2 to 10 mm to produce an interior material for vehicle that is lightweight and has sufficient stiffness and the like. The weight per unit area (fiber density) of the inorganic fiber mat is also not specifically limited, but is preferably in the range from 200 to 1,000 g/m², and particularly from 200 to 800 g/m² to produce an interior material for vehicle that is lightweight and has sufficient stiffness and the like. Moreover, a preferable inorganic fiber mat is a mat having a thickness in the range from 3 to 8 mm and a weight per unit area (fiber density) in the range from 200 to 600 g/m², a particularly preferred is a mat having a thickness in the range from 3 to 6 mm and a weight per unit area (fiber density) in the range from 200 to 400 g/m².

The method of impregnating the inorganic fiber mat with the emulsion mixture is not specifically limited. Examples of the impregnation method include: (1) immersing the inorganic fiber mat in the emulsion mixture; (2) spraying or applying the emulsion mixture to the inorganic fiber mat; and the like. Among these methods, preferred is the method (1). For example, the method (1) can be conducted by immersing the inorganic fiber mat in the emulsion mixture in a container. This method can uniformly impregnate the inorganic fiber mat with the emulsion mixture throughout the mat to give the homogeneous thermally expandable base material for vehicle interior.

After impregnation with the emulsion mixture to the inorganic fiber mat, the inorganic fiber mat is heated at a temperature lower than a thermal expansion starting point of the thermally expandable microcapsule contained in the emulsion mixture, and dried to remove the aqueous medium. The drying method is not specifically limited and example thereof includes heating with a heater such as an infrared heater and a far-infrared heater, heating by blowing a hot air, a high-frequency heating and the like. In addition, heating is preferably performed in a heating furnace. For example, when the inorganic fiber mat impregnated with the emulsion mixture is passed through a heating furnace, the aqueous medium is easily removed to dry the inorganic fiber mat.

Drying is performed at a temperature allowing the aqueous medium to be removed. The temperature for drying is not specifically limited, but is lower than the thermal expansion starting point of the thermally expandable microcapsule. Although the thermal expansion starting point is generally considerably higher than a temperature required for removal of the aqueous medium, the drying temperature is preferably lower than the thermal expansion starting point by 10°C to 80°C, and particularly lower than the thermal expansion starting point by 20°C to 60°C. In addition, there is no need for the drying temperature higher than a melting point of the synthetic resin powder and when the drying temperature is higher than a melting point of the synthetic resin powder, a molten synthetic resin can bind the inorganic fibers while retaining thermally expandable microcapsules to internally reinforce the inorganic fiber mat. Thus the resultant thermally expandable base material for vehicle interior is easy to handle in the subsequent processes such as heat molding. Further, the drying temperature is also preferably determined in consideration of acceleration of removal of the aqueous medium, and is set to a temperature preferably higher than the boiling point of water by 10°C to 60°C (when an organic solvent having higher boiling point than that of water is contained, the boiling point of the organic solvent), and particularly higher than the boiling point of water by 30°C to 50°C. The drying time is also not specifically limited and is generally in the range from 10 to 60 minutes, and particularly from 20 to 50 minutes, which may vary according to the drying temperature.

After drying, the inorganic fiber mat from which the aqueous medium has been removed is heated at a temperature at which the synthetic resin powder in the emulsion mixture impregnated melts and which is lower than a thermal expansion starting point of the thermally expandable microcapsule in the emulsion mixture. In this case, the thermally expandable microcapsule is preferably not expanded. After that, the inorganic fiber mat is hot-pressed, and then the pressed inorganic fiber mat is cooled to give the thermally expandable base material for vehicle interior.

The above-mentioned heating leads to a melting of the synthetic resin powder and the inorganic fibers are bonded to each other to be reinforced. The heating temperature is preferably higher than a melting point of the synthetic resin powder by 5°C to 20°C and particularly higher than a melting point of the synthetic resin powder by 8°C to 17°C, and the temperature is preferably lower than a thermal expansion starting point of the thermally expandable microcapsule by 30°C to 55°C and particularly lower than a thermal expansion starting point of the thermally expandable microcapsule by 35°C to 50°C. Additionally, the above-mentioned hot-pressing is generally conducted with a compression molding machine and is conducted at a temperature preferably higher than a melting point of the synthetic resin powder by 5°C to 50°C, more preferably higher than a melting point of the synthetic resin powder by 10°C to 30°C and particularly higher than a melting point of the synthetic resin powder by 10°C to 20°C and the temperature is preferably in the range from a thermal expansion starting point of the thermally expandable microcapsule to a temperature lower than that temperature by 80°C, more preferably in the range from a thermal expansion starting point of the thermally expandable microcapsule to a temperature lower than that temperature by 50°C and particularly in the range from a thermal expansion starting point of the thermally expandable microcapsule to a temperature lower than that temperature by 20°C.

Heating and hot-pressing may be conducted in the same step or in separate steps. In the case of the same step, heat in hot-pressing may be used to melt the synthetic resin powder.

The cooling is generally conducted by cold-pressing with a compression molding machine or the like. The method leads to a thermally expandable base material for vehicle interior having a predetermined thickness and being homogeneous throughout. When the cold-pressing is performed, a molding plate may be used at an ambient temperature (e.g., 20°C to 35°C) or in a state that a cooling medium such as water circulates therein to rapidly cool. The thermally expandable base material for vehicle interior thus produced is cut into a predetermined dimension according to a type and the like of an interior material for vehicle, and is fed to a step of producing a base material for vehicle interior by thermal expansion of the thermally expandable microcapsule.

The thickness and weight per unit area of the thermally expandable base material for vehicle interior are not specifically limited, but are preferably determined according to a type and the like of an interior material for vehicle produced from the base material. To produce an interior material for vehicle being lightweight and having sufficient stiffness and the like, the thickness is preferably in the range from 0.5 to 8 mm and particularly from 1 to 6 mm, and the weight per unit area is preferably in the range from 300 to 1,200 g/m² and particularly from 300 to 1,000 g/m². Further, the preferable thermally expandable base material for vehicle interior has a thickness of 1 to 4 mm and a weight per unit area of 300 to 700 g/m², and the most preferred is a base material having a thickness of 1 to 3 mm and a weight per unit area of 300 to 500 g/m².

The method for producing the thermally expandable base material for vehicle interior of the present invention comprises steps of: (1) mixing three emulsions; (2) impregnating an inorganic fiber mat with the emulsion mixture; (3) drying; (4) hot-pressing; and (5) cooling. The steps are successive. Such a method can effectively produce a homogeneous thermally expandable base material for vehicle interior.

The method further comprises heating the thermally expandable base material at a temperature higher than the thermal expansion starting point of the thermally expandable microcapsule to thermally expand the thermally expandable base material for vehicle interior.

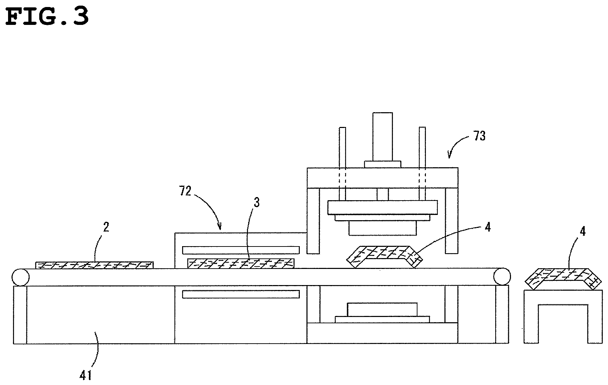

The apparatus and process for producing the base material for vehicle interior are not specifically limited. For example, it can be produced using the following apparatus and process (see, Fig. 3) .

A thermally expandable base material for vehicle interior 2 cut into a predetermined dimension is placed on a base material placing table 41, sent in a thermal expanding chamber 72, which is set to a temperature higher than a thermal expansion starting point of a thermally expandable microcapsule, and is subjected to thermal expansion of the thermally expandable microcapsule to give a base material for vehicle interior 3.

Heating of the thermally expandable base material for vehicle interior is generally conducted by hot-pressing with a heating chamber set to a predetermined temperature, a compression molding machine set to a predetermined temperature or the like. The heating is conducted at a temperature preferably higher than the thermal expansion starting point of the thermally expandable microcapsule by 5°C to 50°C, more preferably higher than the thermal expansion starting point of the thermally expandable microcapsule by 8°C to 35°C, particularly higher than the thermal expansion starting point of the thermally expandable microcapsule by 12°C to 25°C. Thus thermally expandable microcapsule is sufficiently thermally expanded and an interior material for vehicle being lightweight and having good stiffness and the like can be easily produced.

The thickness and weight per unit area of the base material for vehicle interior are not specifically limited, but are preferably determined according to a type and the like of an interior material for vehicle produced from the base material. To produce an interior material for vehicle being lightweight and having sufficient stiffness and the like, the thickness is preferably in the range from 3 to 18 mm and particularly from 3 to 15 mm, and the weight per unit area is preferably in the range from 300 to 1,200 g/m² and particularly from 300 to 1,000 g/m². Further, the base material for vehicle interior has a thickness of 5 to 12 mm and a weight per unit area of 300 to 700 g/m², and the most preferred is a base material having a thickness of 6 to 10 mm and a weight per unit area of 300 to 500 g/m².

The base material for vehicle interior 3 thus produced is generally put in a space between plates of a compression molding machine 73 as it is held at a compression-moldable temperature and is then molded to an interior material for vehicle 4 having a predetermined shape. The compression molding is conducted by cold-pressing, and the plate of the compression molding machine 73 may be at an ambient temperature, or may be forcibly cooled by, for example, circulation of water within the plate according to need. In the apparatus of Fig. 3, transfer of the thermally expandable base material for vehicle interior 2 to the thermal expanding chamber 72 and transfer of the base material for vehicle interior 3 to the compression molding machine 73 are sequentially performed with a belt conveyer, the interior material for vehicle 4 is preferably produced with such an apparatus. In particular, the base material for vehicle interior 3 and the interior material for vehicle 4 are preferably sequentially produced with an integrated apparatus as shown in Fig. 3.

### [EXAMPLES]

The present invention will be specifically described by Examples below.

### Example 1 (production of thermally expandable base material for vehicle interior)

### (1) Production of glass fiber mat (inorganic fiber mat)

A rolled roving of a glass fiber was cut to a predetermined length, and was opened with an opening drum to give a puffy of glass fiber. The glass fibers were pneumatically floated with an air current such that a weight per unit area (fiber density) was 280 g/m² and were deposited to give a glass fiber mat having a thickness of 4.1 mm.

### (2) Preparation of emulsion mixture

300 L of water and 6 L of a surfactant were charged into a 600 L container and stirred to mix. After that, to the container were added 84 L of an emulsion containing 45.7% by weight of high-density polyethylene powder (melting point of the high-density polyethylene: 147°C) dispersed therein, 30 L of an emulsion containing 20.5% by weight of thermally expandable microcapsule (thermal expansion starting point: 178°C) dispersed therein, and 15 L of an emulsion containing 48.4% by weight of acrylic resin adhesive dispersed therein. These were stirred to obtain an emulsion mixture containing 38.4 kg of high-density polyethylene powder, 6.2 kg of thermally expandable microcapsule and 7.3 kg of acrylic resin adhesive powder dispersed therein.

### (3) Thermally expandable base material for vehicle interior

The glass fiber mat produced in (1) above was immersed in the emulsion mixture prepared in (2) above for 45 seconds at a room temperature. After that, the immersed glass fiber mat was taken from the container, and was passed between rolls to be wrung. Subsequently, the glass fiber was allowed to stand for 50 minutes in a heating furnace set to 135°C, followed by being dried. Further, the dried mat was allowed to stand for 3.5 minutes in a heating furnace set to 160°C (higher than a melting point of the high-density polyethylene powder by 13°C) to melt the high-density polyethylene powder and bind glass fibers. Then, the glass fiber mat was heated and pressed for two seconds at 5 MPa with a hot-pressing of which a heating plate was set to 170°C (lower than a thermal expansion starting point of the thermally expandable microcapsule by 8°C). After that, the glass fiber mat was cooled with a cold-pressing machine having cooling plates to give a thermally expandable base material for vehicle interior having a thickness of 1.8 mm. The clearance between the cooling plates in the cold-pressing machine was 2 mm, and a temperature of the cooling plate was set to 20°C by circulation of water within the cooling plates.

### Example 2 (production of base material for vehicle interior)

The thermally expandable base material for vehicle interior produced in Example 1 was allowed to stand for 90 seconds in a heating furnace set to 230°C. Accordingly, the surface of the thermally expandable base material for vehicle interior was heated to 195°C (higher than a thermal expansion starting point of the thermally expandable microcapsule by 17°C), resulting in thermal expansion of the thermally expandable microcapsule. After that, the thermally expandable base material was cooled with a cold-pressing machine having cooling plates to give a base material for vehicle interior having a thickness of 8 mm. The clearance between the cooling plates in the cold-pressing machine was 8 mm and a temperature of the cooling plate was set to 18°C by circulation of water within the cooling plates.

### [INDUSTRIAL APPLICABILITY]

The present invention is applicable in the technical field of a thermally expandable base material for vehicle interior for producing an interior material for vehicle being lightweight and having sufficient sound-absorbing properties, high stiffness and the like, and of a base material for vehicle interior using the thermally expandable base material for vehicle interior. The present invention is particularly useful in the field of products including a ceiling material, a door trim and a lining for a trunk of vehicles, loading room of a wagon, and the like.

## Claims

1. A method for producing a base material for vehicle interior, **characterized by** comprising:
mixing a synthetic resin emulsion, a thermally expandable microcapsule emulsion, and a resin-based adhesive emulsion to prepare an emulsion mixture;
impregnating an inorganic fiber mat with said emulsion mixture;
drying the inorganic fiber mat at a temperature lower than the thermal expansion starting point of the thermally expandable microcapsule contained in said emulsion mixture to remove an aqueous medium;
heating the inorganic fiber mat at a temperature at which a synthetic resin powder contained in said emulsion mixture melts and which is lower than the thermal expansion starting point of the thermally expandable microcapsule;
hot-pressing the inorganic fiber mat; and
producing a thermally expandable base material for vehicle interior by cooling the inorganic fiber mat;
heating said thermally expandable base material for vehicle interior at a temperature higher than the thermal expansion starting point of the thermally expandable microcapsule to thermally expand said thermally expandable base material for vehicle interior.

2. The method for producing a base material for vehicle interior according to Claim 1,
wherein said hot-pressing is conducted at a temperature that is higher than a melting point of said synthetic resin powder by 10°C to 50°C and is in the range from the thermal expansion starting point of the thermally expandable microcapsule to a temperature 80°C lower than said thermal expansion starting point.

3. The method for producing a base material for vehicle interior according to Claim 1 or 2,
wherein the inorganic fiber mat is a glass fiber mat.

4. The method for producing a base material for vehicle interior according to any one of Claims 1 to 3,
wherein said synthetic resin powder is a polyolefin resin powder.

5. The method for producing a base material for vehicle interior according to any one of Claims 1 to 4,
wherein a resin-based adhesive powder contained in said resin-based adhesive emulsion is an acrylic resin powder.

6. The method for producing a base material for vehicle interior according to any one of Claims 1 to 5,
wherein contents of the synthetic resin powder, the thermally expandable microcapsule and the resin-based adhesive powder contained in said resin-based adhesive emulsion are respectively 65% to 85% by weight, 5% to 18% by weight, and 6% to 22% by weight, based on 100% by weight of a total of said synthetic resin powder, said thermally expandable microcapsule and said resin-based adhesive powder.

7. The method for producing a base material for vehicle interior according to any one of Claims 1 to 6,
wherein the heating for thermally expanding the thermally expandable microcapsule is conducted at a temperature that is higher than the thermal expansion starting point of the thermally expandable microcapsule by 5°C to 50°C.

## Patentansprüche

1. Verfahren zur Herstellung eines Basismaterials für den Fahrzeuginnenraum, **dadurch gekennzeichnet, dass** es umfasst:
Mischen einer Kunstharzemulsion, einer thermisch expandierbaren Mikrokapselemulsion und einer Harz-basierten Haftmittelemulsion, um eine Emulsionsmischung herzustellen;
Imprägnieren einer anorganischen Fasermatte mit dieser Emulsionsmischung;
Trocknen der anorganischen Fasermatte bei einer Temperatur, die niedriger ist als der thermische Expansionsstartpunkt der thermisch expandierbaren Mikrokapseln, die in der Emulsionsmischung enthalten sind, um ein wässriges Medium zu entfernen;
Erwärmen der anorganischen Fasermatte auf eine Temperatur, bei der ein in der Emulsionsmischung enthaltenes Kunstharzpulver schmilzt und die niedriger ist als der thermische Expansionsstartpunkt der thermisch expandierbaren Mikrokapseln;
Heißpressen der anorganischen Fasermatte; und
Herstellen eines thermisch expandierbaren Basismaterials für den Fahrzeuginnenraum durch Kühlen der anorganischen Fasermatte;
Erwärmen des thermisch expandierbaren Basismaterials für den Fahrzeuginnenraum auf eine Temperatur, die höher ist als der thermische Expansionsstartpunkt der thermisch expandierbaren Mikrokapseln, um dieses thermisch expandierbare Basismaterial für den Fahrzeuginnenraum thermisch zu expandieren.

2. Verfahren zur Herstellung eines Basismaterials für den Fahrzeuginnenraum nach Anspruch 1,
wobei das Heißpressen bei einer Temperatur durchgeführt wird, die um 10°C bis 50°C höher als ein Schmelzpunkt des Kunstharzpulvers ist und im Bereich vom thermischen Expansionsstartpunkt der thermisch expandierbaren Mikrokapseln bis zu einer Temperatur 80°C niedriger als dieser thermische Expansionsstartpunkt liegt.

3. Verfahren zur Herstellung eines Basismaterials für den Fahrzeuginnenraum nach Anspruch 1 oder 2,
wobei die anorganische Fasermatte eine Glasfasermatte ist.

4. Verfahren zur Herstellung eines Basismaterials für den Fahrzeuginnenraum nach einem der Ansprüche 1 bis 3,
wobei das Kunstharzpulver ein Polyolefinharzpulver ist.

5. Verfahren zur Herstellung eines Basismaterials für den Fahrzeuginnenraum nach einem der Ansprüche 1 bis 4,
wobei ein Harz-basiertes Haftmittelpulver, das in der Harz-basierten Haftmittelemulsion enthalten ist, ein Acrylharzpulver ist.

6. Verfahren zur Herstellung eines Basismaterials für den Fahrzeuginnenraum nach einem der Ansprüche 1 bis 5,
wobei die Gehalte des Kunstharzpulvers, der thermisch expandierbaren Mikrokapseln und des Harz-basierten Haftmittelpulvers, das in der Harz-basierten Haftmittelemulsion enthalten ist, 65 bis 85 Gew.-%, 5 bis 18 Gew.-% bzw. 6 bis 22 Gew.-%, bezogen auf 100 Gew.-% der Gesamtmenge des Kunstharzpulvers, der thermisch expandierbaren Mikrokapseln und des Kunstharzpulvers, beträgt.

7. Verfahren zur Herstellung eines Basismaterials für den Fahrzeuginnenraum nach einem der Ansprüche 1 bis 6,
wobei das Erwärmen zum thermischen Expandieren der thermisch expandierbaren Mikrokapsel bei einer Temperatur durchgeführt wird, die um 5°C bis 50°C höher ist als der thermische Expansionsstartpunkt der thermisch expandierbaren Mikrokapseln.

## Revendications

1. Procédé pour produire un matériau de base pour un intérieur de véhicule, **caractérisé en ce qu'**il comprend :
le mélange d'une émulsion de résine synthétique, d'une émulsion de microcapsule thermiquement expansible, et d'une émulsion d'adhésif à base de résine, pour préparer un mélange d'émulsions ;
l'imprégnation d'un mat de fibres inorganiques avec ledit mélange d'émulsions ;
le séchage du mat de fibres inorganiques à une température inférieure au point de début de dilatation thermique de la microcapsule thermiquement expansible contenue dans ledit mélange d'émulsions pour éliminer un milieu aqueux ;
le chauffage du mat de fibres inorganiques à une température à laquelle une poudre de résine synthétique contenue dans ledit mélange d'émulsions fond et qui est inférieure au point de début de dilatation thermique de la microcapsule thermiquement expansible ;
le pressage à chaud du mat de fibres inorganiques ; et
la production d'un matériau de base thermiquement expansible pour intérieur de véhicule par refroidissement du mat de fibres inorganiques ;
le chauffage dudit matériau de base thermiquement expansible pour intérieur de véhicule à une température supérieure au point de début de dilatation thermique de la microcapsule thermiquement expansible pour dilater thermiquement ledit matériau de base thermiquement expansible pour intérieur de véhicule.

2. Procédé pour produire un matériau de base pour un intérieur de véhicule selon la revendication 1, dans lequel ledit pressage à chaud est effectué à une température qui est supérieure de 10°C à 50°C au point de fusion de ladite poudre de résine synthétique et qui est située dans la plage allant du point de début de dilatation thermique de la microcapsule thermiquement expansible à une température inférieure de 80°C audit point de début de dilatation thermique.

3. Procédé pour produire un matériau de base pour un intérieur de véhicule selon la revendication 1 ou 2, dans lequel le mat de fibres inorganiques est un mat de fibres de verre.

4. Procédé pour produire un matériau de base pour un intérieur de véhicule selon l'une quelconque des revendications 1 à 3, dans lequel ladite poudre de résine synthétique est une poudre de résine de polyoléfine.

5. Procédé pour produire un matériau de base pour un intérieur de véhicule selon l'une quelconque des revendications 1 à 4, dans lequel une poudre d'adhésif à base de résine contenue dans ladite émulsion d'adhésif à base de résine est une poudre de résine acrylique.

6. Procédé pour produire un matériau de base pour un intérieur de véhicule selon l'une quelconque des revendications 1 à 5, dans lequel les teneurs en la poudre de résine synthétique, la microcapsule thermiquement expansible et la poudre d'adhésif à base de résine contenue dans ladite émulsion d'adhésif à base de résine sont respectivement de 65 % à 85 % en poids, de 5 % à 18 % en poids, et de 6 % à 22 % en poids, pour 100 % en poids du total de ladite poudre de résine synthétique, de ladite microcapsule thermiquement expansible et de ladite poudre d'adhésif à base de résine.

7. Procédé pour produire un matériau de base pour un intérieur de véhicule selon l'une quelconque des revendications 1 à 6, dans lequel le chauffage pour dilater thermiquement la microcapsule thermiquement expansible est effectué à une température qui est supérieure de 5°C à 50°C au point de début de dilatation thermique de la microcapsule thermiquement expansible.
